Europäisches Patentamt

European Patent Office

Office européen des brevets

(11) Veröffentlichungsnummer: **0 314 874 B1**

(12) **EUROPÄISCHE PATENTSCHRIFT**

(45) Veröffentlichungstag der Patentschrift: **11.11.92**

(51) Int. Cl.5: **B29B 7/40,** E04D 5/10, E04D 3/35

(21) Anmeldenummer: **88110528.2**

(22) Anmeldetag: **01.07.88**

(54) **Verfahren zum Austragen eines Schaumstoffgemisches, insbesondere für ein Wärmedämmaterial, vermittels eines Mischkopfes für mindestens zwei reaktive Komponenten im Niederdruckverfahren.**

(30) Priorität: **05.11.87 EP 87116268**
**11.05.88 DE 8806267 U**

(43) Veröffentlichungstag der Anmeldung:
**10.05.89 Patentblatt 89/19**

(45) Bekanntmachung des Hinweises auf die Patenterteilung:
**11.11.92 Patentblatt 92/46**

(84) Benannte Vertragsstaaten:
**AT BE CH DE ES FR GB GR IT LI LU NL SE**

(56) Entgegenhaltungen:

| | |
|---|---|
| DE-A- 2 322 716 | DE-A- 2 519 484 |
| DE-A- 2 725 937 | DE-A- 3 300 755 |
| DE-B- 1 457 182 | DE-U- 8 514 452 |
| DE-U- 8 519 811 | DE-U- 8 604 889 |
| FR-A- 2 310 376 | GB-A- 1 103 551 |
| GB-A- 2 140 314 | LU-A- 38 091 |
| US-A- 3 081 487 | US-A- 3 092 469 |
| US-A- 3 111 389 | US-A- 3 455 076 |
| US-A- 3 572 646 | US-A- 3 979 245 |

(73) Patentinhaber: **Prignitz, Herbert**
**Papyrusweg 12**
**W-2000 Hamburg 74(DE)**

(72) Erfinder: **Prignitz, Herbert**
**Papyrusweg 12**
**W-2000 Hamburg 74(DE)**

(74) Vertreter: **Richter, Werdermann & Gerbaulet**
**Neuer Wall 10**
**W-2000 Hamburg 36(DE)**

EP 0 314 874 B1

# Beschreibung

Das Verfahren, der entsprechende Mischkopf und auch das so hergestellte Dämmaterial ist überall dort einsetzbar, wo Dämmaterial hergestellt und eingesetzt wird, mit dem größere Dachflächen zur Ausbildung einer Dämm- und Dichtschicht versehen werden soll.

Die Erfindung betrifft ein Verfahren zum Austragen eines Schaumstoffgemisches, insbesondere für ein Wärmedämmaterial, vermittels eines Mischkopfes für mindestens zwei reaktive Komponenten im Niederdruckverfahren, bestehend aus einem Rohr, in welchem ein Quirl mit hoher Umdrehungszahl umläuft, einen Mischkopf zur Durchführung des Verfahrens und ein nach dem Verfahren hergestelltes Dämmaterial.

Mischkopfe für Polyurethan-Schaumstoffgemische im Niederdruckverfahren sind bekannt. Um das Material vermittels eines Mischkopfes auf eine unter dem Mischkopf durchlaufende Unterlage zu verteilen, werden die unterschiedlichsten Verfahren und Mittel benutzt, die sehr viele Unzulänglichkeiten aufweisen. Es genügt meistens bei der hohen Viskosität der Schaumstoffgemische noch nicht einmal das Hin- und Herführen des Mischkopfes quer zur Laufrichtung, um das gewünschte Verlaufen des Schaumstoffgemisches zu erreichen. Es werden z.B. fischschwanzartige Austrittsdüsen benutzt. Auch kommen Rohre mit kleinen Bohrungen zur Anwendung, wobei das Gemisch mit Pressluft ausgetragen wird. All diese Austragsarten des Schaumstoffgemisches, nach dem Vermischen, erfordern einen erheblichen Aufwand und bringen nicht den gewünschten Erfolg oder sind, wie das Austragen mit Druckluft, gesundheitsgefährdend.

So ist aus der US-A-3,111,389 ein Verfahren zum Austragen eines Schaumstoffgemisches, insbesondere für ein Wärmedämmaterial bekannt, bei dem vermittels eines Mischkopfes für mindestens zwei reaktive Komponenten im Niederdruckverfahren, bestehend aus einem Rohr, in welchem ein Quirl mit hoher Umdrehungszahl umläuft, das zur Reaktion fertige Gemisch durch Schwerkraft ausgetragen und durch zusätzlich in den Austragbereich eingeblasenes Gas aufgefächert wird und auf eine Unterlage verteilt wird, um dort vollständig zu reagieren und aufzuschäumen.

Die DE-OS 27 25 937 zeigt eine rollbare Wärmedämmbahn, bestehend aus einer Isolierschicht aus geschäumtem Kunststoffmaterial mit quer verlaufenden Einschnitten und einer einseitig darauf befestigten, vorzugsweise angeklebten wasserdichten Abdeckbahn, wobei sich die Isolierschicht aus geschäumtem Kunststoffmaterial zwischen zwei einander gegenüberliegenden Rändern der rechteckförmigen Wärmedämmbahn verjüngt, so daß die Dämmstreifen einen keilförmigen Querschnitt aufweisen.

Aus dem DE-GM 85 14 452.5 ist eine Polymerbitumen-Schweißbahn zur Abdeckung von Dächern bekannt, bei der ein Trägermaterial aus Glasgewebe, Vlies od.dgl. mit einer Imprägnierung mit Polymerbitumen und einer Dichtschicht aus Polymerbitumen besteht, wobei vorgesehen ist, daß die Dichtschicht an ihrer Unterseite als Trenn- und (Dampfdruck-)Ausgleichsschicht ausgestaltet ist, wobei die Ausgleichsschicht aus einem Kanalsystem besteht, welches aus einander kreuzenden Längsnuten und Quernuten besteht. Auch kann vorgesehen sein, daß die Ausgleichsschicht aus noppenförmigen Vorsprüngen gebildet ist.

Es ist daher Aufgabe der vorliegenden Erfindung, ein Verfahren der eingangs genannten Art und eine Vorrichtung hierzu zu schaffen, bei denen diese Nachteile nicht mehr gegeben sind und mit denen das Austragen von Schaumstoff ohne Qualitätsschwankungen, ohne Unterbrechungen wegen anfallender Rüstzeiten und problemlos an alle Anforderungen anpaßbar durchführbar ist.

Zur Lösung dieser Aufgabe wird ein Verfahren der eingangs genannten Art vorgeschlagen, nach dem nur eine Komponente aus nicht allein reagierenden Materialien nahe eines äußeren Lagers einer fliegenden Welle, auf der ein Quirl aufgesetzt ist, in der Nähe der Welle in einen Mischraum ein- und durch Einwirkung von Zentrifugalkraft von diesem weitergeführt wird, um erst dann mit einer weiteren Komponente, die mit der zuerst eingebrachten Komponente reagiert, zur Vermischung kommt, so daß das Lager zur Vermeidung von vorzeitigen Reaktionen, Verschmutzungen, Erhitzungen oder Beschädigungen des Lagers nicht mit den miteinander reagierenden Materialien gemeinsam in Berührung kommt.

Das vorgeschlagene Verfahren ermöglicht eine gleichmäßige Verteilung des Schaumstoffgemisches auf der Unterlage, selbst bei hoher Viskosität des Schaumstoffgemisches und kleinstem Durchsatz auf einfachste Weise unter Vermeidung der genannten Nachteile.

Ein entsprechender Mischkopf zur Durchführung des Verfahrens der in einem Maschinenrahmen angeordnet ist und der Mischkopf selbst aus einem gehäuseartigen Mischrohr besteht, das an seinem die Austragöffnung aufweisenden unteren Ende gegenüberliegenden oberen Ende einen deckelartigen Verschlußkörper aufweist, ist erfindungsgemäß so ausgestaltet, daß in dem Verschlußkörper ein Lager angeordnet ist, in dem eine von einer Antriebseinrichtung antreibbare Welle fliegend gelagert ist, auf der ein sich bis in den Bereich der Austragsöffnung erstreckende Quirlkörper aufgesetzt ist und die sich durch das gesamte Mischrohr erstreckend ausgebildet ist, wobei unterhalb des Lagers unter Ausbildung eines spaltförmigen Zwischenraumes der zylinderförmig ausgebildete Qirlkörper auf der Welle angeordnet ist, in dem Verschlußkörper ein in den Zwischenraum mündender erster Zuführungskanal ausgebildet ist und in dem Mischrohr ein in einen zwischen der Mischrohrinnenwand und der Quirloberfläche ausgebildeter Mischraum mündender zweiter Zuführungskanal ausgebildet ist.

Sollen z.B. auf einer Laminatmaschine größere oder geringere Breiten des Schaumstoffstranges gefertigt werden, so kann das durch Verstellen des Mischkopfes in der Höhe erreicht werden, wobei der durch die Zentrifugalkraft gebildete Kegel des Auftragsgemisches entsprechend eine größere oder kleine Fläche bestreicht.

Es ist auch möglich, eine unterschiedliche Dikke des Schaumstoffauftrags quer zur Laufrichtung, wie es z.B. für die Herstellung von Gefälleplatten erforderlich ist, durch Schrägstellung um wenige Grad aus der Senkrechten und geringes Verschieben in der Horizontalen des Mischkopfes zu erreichen.

Werden größere Auftragsbreiten erforderlich (z.B. über 1000 mm) so ist es möglich, ohne den Mischkopf quer zur Bewegungsrichtung der Unterlage oszillieren zu lassen, zwei Mischköpfe nebeneinander anzuordnen.

Durch die Führung der einen, nicht mit sich selbst reagierenden Komponente des Schaumes, in die Nähe des äußeren Lagers des Mischkopfes und der Welle und Zentrifugieren in den Mischraum, um dort erst mit der Komponente, mit der die Reaktion stattfindet, in Berührung kommen zu Lassen, wird eine Verschmutzung des Lagers vermieden und der gesamte Mischkopf für kontinuierlichen Betrieb funktionsfähig erhalten.

Die Mantelnuten des Quirls, die die Schnekkengänge unterbrechen und eine Nachmischung herbeiführen, sind zweckmäßig nicht bis zum Ende des Quirls durchzuführen. Damit wird vermieden, daß bei nicht vollständig gefüllten Gängen der Förderschnecke, durch hohe Umdrehungszahl oder geringeren Materialdurchsatz wieder gemischtes, zur Reaktion kommendes Material oder Luft in den unteren Teil des Quirls gelangen, und so auch hier eine Verschmutzung ausgeschlossen wird.

Bevorzugte Weiterbildungen der Vorrichtung sind in den Ansprüchen 2 bis 12 gekennzeichnet. Mit einer derartigen Vorrichtung ist es möglich, ein Wärmedämmaterial als Dämm- und Dichtschicht für Dachflächen zu schaffen, das ermöglicht, größere Flächen von mehreren Quadratmetern auf einmal zu belegen, bestehend aus auf eine Unterlage kaschierte Dämmaterialstreifen.

Es ist bekannt, bei Flachdächern, speziell bei sogenannten Warmdächern, die Dachdichtung in mehreren Lagen auf die Dämmung aufzubringen. Von den Dämmstoffherstellern wurde dieses mehrschichtige Aufbringen dadurch zu vereinfachen versucht, daß man Dämmelemente mit dem Normalmaß von 1 mal 0,5 m mit einer einfachen Dichtschicht mit zweiseitig überstehender überlappung zur Verklebung mit bereits liegendem Material, bestehend aus bereits aufgebrachten Dämmelementen, versah. Damit sollte die ganze Dachdeckung vereinfacht werden und das Dämmaterial gleich nach dem Verlegen gegen Witterungseinflüsse geschützt sein. Es mußten dann noch die eigentlichen Dichtschichten (zumindest eine) aufgebracht werden, weil durch das Aufbringen der Elemente zu kurze überlappungen entstanden, die ein Eindringen von Feuchtigkeit von außen befürchten Ließen.

Es wurden dann zur weiteren Vereinfachung und zum schnelleren Arbeitsablauf Rollbahnen hergestellt, die aus einer entsprechend breiten Dichtungsbahn mit einer Länge von bis zu 10 m bestanden, auf die Dämmaterialstreifen aufkaschiert wurden, die es ermöglichten, diese bis zu 10 m Langen Bahnen aufzurollen. Diese Rollbahnen sind bis zu 1 m breit und decken bei einer Länge von 5 m eine Dachfläche von 5 m$^2$ auf eimal ab. 5 m war die verlangte Mindestlänge, um zu kurze überlappungen der Elemente zu vermeiden.

Diese Rollbahnen ermöglichten das Aufrollen der Dämmstoffstreifen zu einer größeren Einheit für eine flächendeckende Verlegung. Als Dichtungsbahn werden dabei normale Bitumendachbahnen verwendet. Beim Aufrollen zeigen diese jedoch Knickfalten in der Tragerbahn, so daß Undichtigkeiten bei dem fertigen Flachdach zu befürchten sind. Es müssen daher zusätzlich mehrere, mindestens jedoch eine Dachbahn zusätzlich aufgebracht werden.

Auch heute wird bei Flachdächern, die ein Gefälle von 3 % und mehr haben, noch die Verlegung von mindestens zwei Dichtschichten auf einer Wärmedämmschicht gefordert. Bei weniger als 3 % Gefälle oder gar Null-Gefälle werden drei Dichtungs- oder Schweißbahnen auf der Wärmedämmschicht als handwerksgerecht angesehen. Selbst die heute sehr weit entwickelten Kunststofolien, die einlagig, auch bei Null-Gefälle-Dächern zugelassen sind, erfordern als Sicherung auf einer Wärmedämmung eine zusätzliche Unterlagsbahn zum Schutz der verlegten Folie an den Stößen der Wärmedämmung gegen Beschädigung und gegen Auswandern von z.B. Weichmachern aus der Foliendichtung. Die auf einer Rollbahn befindliche Trägerbahn, gleich welcher Art, wird jedoch als Schutz der Folie anerkannt.

Ein weiterer, bedeutender Nachteil bei der mehrlagigen Dachabdichtung ist die gefürchtete Blasenbildung auf dem Flachdach. Hervorgerufen wird diese durch nicht verklebte Stellen zwischen den Dichtschichten. Der geringste Einschluß von Feuchtigkeit beim Verlegen der Dichtschichten aufeinander oder auf dem Wärmedämmstoff führt zu unverklebten Stellen und damit unweigerlich zur Blasenbildung.

Diese Blasenbildung wird oft auf den scheinbar entstehenden Dampfdruck, z.B. bei Sonnenein-strahlung zurückgeführt. Ein Dampfüberdruck ge-gen die Atmosphäre kann aber nur bei 100 Grad C und mehr auftreten. Die Blasenbildung in den Deckschichten ist aber nur durch die Volumenvergrößerung der eingeschlossenen Luft bei den unverklebten Stellen nach dem Gesetz von Gay-Lussac möglich. Nach diesem Gesetz verhalten sich die Luftvolumina wie die absoluten Temperaturen. Eine Aufblähung der Luft zwischen den einzelnen Dichtschichten ist daher unvermeidlich, wenn die Verbindung zwischen den einzelnen Dichtschichten durch entsprechende Verklebung oder Verschweißung nicht so hergestellt wird, daß mehrere Lagen zu einer werden und eine vollkommene Verbindung entsteht. Das ist aber so gut wie unmöglich. Besser geworden ist es durch das Verwenden von Schweißbahnen, wobei die Oberflächen der beiden zusammengefügten Bahnen verschmolzen werden. Die Blasenbildung kann also nur vermieden werden, wenn die aufeinanderliegenden Schichten bzw. Dichtschichten zu einer Einheit zusammengefügt werden.

Weiterhin ergibt sich heute eine weitere Anforderung. Bei den Flachdächern wird immer mehr gefordert, ob im Neubau oder in der Sanierung, daß kein Wasser auf dem Dach nach dem Regen stehen bleibt. Es werden also immer mehr Gefälledächer hergestellt.

Das geschieht in herkömmlicher Form, beim Neubau vielfach durch Aufbringen eines Gefällestrichs, entweder in Schwerbeton oder durch einen Leichtbeton.

Damit ist das Gefälle gegeben und es bedarf keiner weiteren Berücksichtigung bei Aufbringen der Wärmedämmung und der Dichtung.

Wenn das nicht der Fall ist, so wird die Wärmedämmung meistens in Keilform geliefert und das zum großen Teil in Polystyrol. Es gibt da verschiedene Forderungen an das Gefälle, insbesondere von 1 % bis 3 %. Meistens geschieht das nach vorher angefertigten Zeichnungen, bei denen dann das gesamte Gefälle im Werk in irgend einer Form hergestellt wird, entweder durch Schneiden oder durch Ausformen einzelner Stücke. Es wäre daher wünschenswert, ein Wärmedämmaterial zu schaffen, das durch bahnförmigen Aufbau es ermöglicht, größere Flächenstücke des Materials in einem Arbeitsgang herzustellen und größere Flächen von mehreren Quadratmetern auf einmal zu belegen.

Es ist wünschenswert, ein Wärmedämmaterial als Dämm- und Dichtschicht für Dachflächen zu schaffen, das als alleiniges Dachelement für die Dachflächen verwendbar ist, das auf größere Flächen auf einmal auflegbar ist, und das auch zur Ausbildung eines Dachgefälles ohne vorherige Aufbringung eines Gefällestückes verwendbar ist, wobei die Nachteile der bekannten Lösung wie der Verschnitt oder die Notwendigkeit der Einzelformung bzw. die Bildung von Knickfalten und die Blasenbildung vermeidbar ist.

Insbesondere mit dem Verfahren und der Vorrichtung ist es möglich, ein Wärmedämmaterial als Dämm- und Dichtschicht zu schaffen, daß die Dämmaterialstreifen auf eine geeignete Folienbahn so als Dichtschicht kaschiert sind, daß das Wärmedämmaterial als Wärmedämmung und Dichtschicht ausgebildet ist, so daß bei Verlegung eine weitere Dichtbahn nicht aufgebracht werden muß, und daß die Dämmaterialstreifen einen rechteckförmigen oder keilförmigen Querschnitt aufweisen.

Bevorzugterweise ist dabei vorgesehen, daß der Steigungswinkel der Keilform quer zur Rollbahnlängsrichtung einer Steigung von 1 %, 2 % oder 3 % entspricht.

Mit einem derartigen Wärmedämmaterial kann eine Dachfläche in einem Arbeitsgang mit der erforderlichen Wärmedämmung und Dichtschicht versehen werden, ohne daß eine zusätzliche Dichtungsbahn aufgebracht werden muß. Damit kann eine ganz entscheidende Arbeits- und Materialer-sparnis erreicht werden, wobei gleichzeitig die Qualität der Dachbedeckung steigt, da durch die Verringerung der handwerklichen Tätigkeit eine Verringerung der Fehlermöglichkeiten erreicht wird.

Gemäß einer bevorzugten Ausführungsform ist dabei vorgesehen, daß das Kaschiermaterial aus einer Kunststoffolie besteht, während nach einer anderen bevorzugten Ausführungsform das Kaschiermaterial aus einer Metallfolie besteht. Wesentlich ist dabei, daß durch derartige Kaschiermaterialien gewährleistet ist, daß die Wärmedämmung so auf die Dachfläche aufgebracht wird, daß eine geeignete Wärmedämmung entsteht, auf der gleichzeitig eine Dichtschicht angeordnet ist, die ohne Schwierigkeiten in den Überlappungsbereichen verbindbar ist, so daß das Dämmaterial nach dem Verlegen gegen Witterungseinflüsse geschützt ist. Das Dämmaterial kann dabei nach einer bevorzugten Ausführungsform aus Polyurethan-Streifen bestehen, während nach einer anderen bevorzugten Ausführungsform vorgesehen ist, daß als Däm-material Polystyrol-Partikelschaum oder extrudier-tes Polystyrol verwendet wird. Diese Ausbildung der Dämmaterialstreifen als Hartschaumstoffkörper führt zu einer optimalen Wärmedämmung, wobei bevorzugterweise vorgesehen ist, daß das Dämmaterial so hergestellt und/oder aufgebracht wird, daß die Dämmaterialstreifen im verlegten Zustand spaltfrei nebeneinander liegen.

Dabei kann vorgesehen sein, daß das Dämmaterial an seiner der Kaschierung gegenüberliegenden Fläche Diffusionskanäle aufweist. Diese können dadurch ausgebildet werden, daß auf der der Kaschierung gegenüberliegenden Fläche in regelmäßiger Anordnung Vorsprünge vorgesehen sind, die eine ballige, eine rippenartige, eine kegelstumpfförmige oder eine andere geometrische Form darstellende Ausbildung aufweisen.

Zur Erhöhung der Formstabilität des Wärmedämmaterials, insbesondere für höchste Beanspruchungen, kann vorzugsweise vorgesehen werden, daß das Dämmaterial und/oder das Kaschierungsmaterial mit einem Stabilisierungs- oder Verstärkungsgewebe versehen ist.

Vorteilhafte und zweckmäßige Ausgestaltungen der Erfindung sind in den Unteransprüchen gekennzeichnet.

Ausführungsbeispiele der Erfindung werden nachstehend anhand der Zeichnung erläutert. Es zeigen

**Fig. 1** in einer schematischen Darstellung einen Mischkopf im senkrechten Schnitt,

**Fig. 2** in schematischer Darstellung den Mischkopf gem.Fig.1 mit einer Antriebseinrichtung in einem angedeuteten Maschinenrahmen mit einem angedeuteten Schaumstoffaustrag,

**Fig. 3** die Anordnung gem.Fig.2 mit dem aus der Senkrechten verschwenkten und seitlich verschobenen Mischkopf,

**Fig. 4** in einer Ansicht von unten einen Abschnitt eines Wärmedämmaterials,

**Fig. 5** in einem senkrechten Schnitt gem.Linie V-V in Fig.4 das Wärmedämmaterial, und

**Fig. 6** das Wärmedämmaterial in der für ein Flachdach vorgesehenen Nebeneinanderordnung zur Ausbildung eines Gefälles.

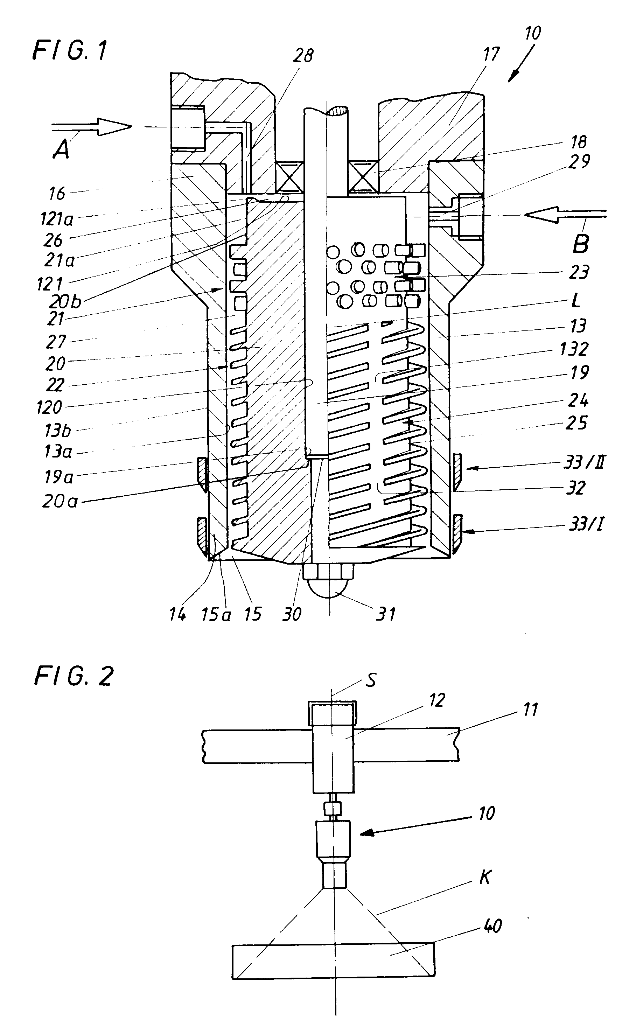

In den Fig.1 bis 3 ist ein Mischkopf für den Austrag eines in der Zeichnung nicht dargestellten und aus Komponenten A und B bestehenden Schaumstoffgemisches dargestellt. Ein derartiger Mischkopf ist in einem Maschinenrahmen 11 angeordnet und wird von einer Antriebseinrichtung 12 betrieben, wobei dem Mischkopf 10 über nicht dargestellte Zuführungsleitungen die Komponenten A und B zugeführt werden.

Der Mischkopf 10 besteht aus einem Mischrohr 13, das an seinem unteren Ende 14 die Austragöffnung 15 bildet, während das obere Ende 16 mit dem Verschlußkörper 17, an dem das Mischrohr 13 gehaltert ist, verschlossen ist.

Im Bereich der Austragöffnung 15 ist das Mischrohr 13 mit einer Fase 15a versehen, die dem aus den gemischten Komponenten A,B bestehenden Schaumstoffmaterial einen bestimmten Austragskegel K verleiht.

In dem Verschlußkörper 17, der drehfest an der Antriebseinrichtung 12 gehaltert ist, ist ein Lager 18 angeordnet, in dem eine freifliegende Welle 19 gelagert ist. Unterhalb des Lagers 18 trägt die Welle 19 den Quirlkörper 20, wobei die Welle 19 und der Quirlkörper 20 sich bis in den Bereich der Austragöffnung 15 des Mischrohres 13 erstrecken. Der Quirlkörper 20 ist dabei mit einer Längsdurchbohrung 120 versehen, mit der er auf die Welle 19 aufgesteckt ist. Die Welle 19 ist dabei mit einem Wellenabsatz 19a versehen, während die Längsdurchbohrung 120 eine Stufe 20a aufweist, derart, daß der Quirlkörper 20 bis zu dem aus dem Absatz 19a und der Stufe 20a gebildeten Anschlag auf die Welle 19 aufschiebbar ist.

Der Quirlkörper selbst, der als Zylinder ausgebildet ist, weist zwei Abschnitte 21,22 auf, wobei der obere Abschnitt 21 mit auf der Oberfläche 20b des Quirlkörpers 20 angeordneten, z.B. eine zylinderstumpfförmige Gestalt aufweisenden Dornen 23 versehen ist, während der zweite Abschnitt 22 als Förderschnecke 24 für die Förderung des Materials A,B durch die Schneckengänge 25 der Förderschnecke 24 ausgebildet ist.

Zwischen der scheibenförmigen oberen Endfläche 121 des Quirlkörpers 20, die mit einem in Wellenlängsrichtung L auskragenden umlaufenden äußeren Rand 121a versehen ist, und dem gegenüberliegend angeordneten und das Lager 18 tragenden Verschlußkörper 17 ist ein spaltförmiger Zwischenraum 26 ausgebildet, wobei ein im Bereich des spaltförmigen Zwischenraumes 26 und/oder des diesen begrenzenden umlaufenden Randes 121 mündender erster Zuführungskanal 28 im Verschlußkörper 17 ausgebildet ist, durch den die Komponente A in diesen Bereich zuführbar ist. Unterhalb des umlaufenden Randes 121a ist auf der Oberfläche 20b des Quirlkörpers 20 vor Beginn des die Dorne 23 tragenden Abschnittes 21 ein dornenfreier Bereich 21a ausgebildet, der einen durch die Höhe der Dorne 23 vorgegebenen Abstand zur Innenwand 13a des Mischrohres 13 aufweist und einen ersten Mischraum 27 bildet. In diesen wird infolge der Zentrifugalkraft die in den spaltförmigen Zwischenraum 26 eingebrachte Komponente A überführt. Gleichzeitig mündet im Bereich des Mischraumes 27 auf der Innenwand 13a des Mischrohres 13 ein zweiter Zuführungskanal 29 zur Zuführung der Komponente B. Daher werden im Mischraum 27 die Komponenten A und B gemischt, wobei die eigentliche Vermischung durch die Dorne 23 bewerkstelligt wird. Da die Komponenten A und B druckbeaufschlagt über die Zuführungskanäle 28,29 zugeführt werden, wird das im Mischraum 27 erstellte und von den Dornen 23 durchmischte Komponentengemisch in den Bereich der Förderschnecke 24 geführt und von den Schneckengängen 25 aufgenommen.

In Anpassung an die verschiedenen Faktoren und Einflußgrößen sowie an die Komponenten A und B kann die räumliche Größe des spaltförmigen Zwischenraumes eingestellt bzw. verändert werden, indem auf die Welle 19 ein oder mehrere Scheiben 30 gleicher oder unterschiedlicher Dicke aufgeschoben und bis an den Absatz 19a herangeführt werden, bevor der Quirlkörper 20 aufgesetzt und vermittels der Mutter 31 der Welle 19 festgeschraubt wird. Durch das Anschlagen der Stufe 20a an die Scheiben 30 wird ein Längsversatz des Quirlkörpers 20 erreicht, so daß sich die Größe des spaltförmigen Zwischenraumes 26 entsprechend vergrößert einstellt.

Eine Anzahl der Schneckengänge 25 der Förderschnecke 24 sind durch Unterbrechungen 132 in der Schnecke 24 verbunden, so daß sich ein oder mehrere in Wellenlängsrichtung L verlaufende Verbindungen zwischen den Schneckengängen 25 der Förderschnecke 24 ergeben. Diese können auch als Mantelnuten 32 ausgebildet sein. Dabei ist vorgesehen, daß die Schneckengänge 25 im Bereich der Austragöffnung 15 nicht durch Durchbrechungen 132 bzw. Mantelnuten 32 verbunden sind.

An seiner Außenwand 13b ist das Mischrohr 13 im Bereich der Austragöffnung 15 mit einem das Mischrohr 13 umfassenden Ring als Abstreifer 33 versehen. Der Abstreifer 33 ist auf dem Mischrohr 13 bzw. auf der Außenwand 13b des Mischrohres 13 in Wellenlängsrichtung L verschiebbar angeordnet, wobei in der Zeichnung bei I. eine Arbeitsstellung des Abstreifers 33 und bei II. eine Ruhestellung des Abstreifers 33 dargestellt ist.

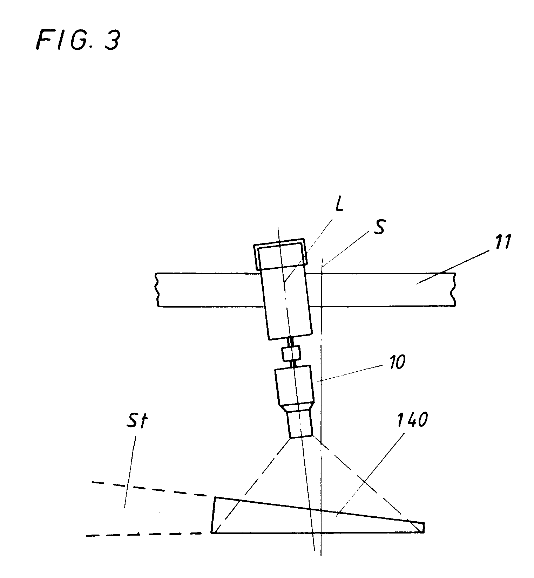

Wie in Fig.2 dargestellt ist, werden die gemischten und reagierenden Komponenten A und B des Schaumstoffgemisches durch das Zusammenwirken des Quirls 20, der entstehenden Zentrifugalkräfte und der Fase 15a in einem Austragskegel K ausgetragen. Hierdurch ergibt sich eine Beaufschlagung eines unter dem Mischkopf 10 befindlichen bzw. bewegten Materials, wobei die Fase 15a auch mit einem Radius versehen sein kann, so daß das austretende Material einen steileren Streukegel K bildet. Bei 34 ist der etwa rechteckförmige Schaumaustrag angedeutet, der sich ergibt, wenn der Mischkopf 10 die in Fig.2 dargestellte Lage einnimmt. Wenn der Mischkopf, wie dies in Fig.3 dargestellt ist, in Wellenlängsrichtung um einen Winkel gegenüber der Senkrechten ausgelenkt und seitlich verschoben wird, ergibt sich ein aufgehender Schaum 134, der eine Steigung St aufweist, wie dies ebenfalls in Fig.3 angedeutet ist. Hierdurch ist es möglich, Schaummaterialien und insbesondere Dämmaterialstreifen auszubilden, die einen keilförmigen Querschnitt aufweisen.

Der voranstehend beschriebene Mischkopf, der im Prinzip die Vorrichtung zur Durchführung des neuartigen Verfahrens darstellt, ist nicht beschränkt auf die voranstehend beschriebenen und in der Zeichnung dargestellten Ausführungsformen. Änderungen in der Art der Mischorgane auf der Oberfläche des Quirls sowie in der Ausbildung der Austragsöffnung liegen ebenso im Rahmen der Erfindung, wie eine andere Art einer Verstellvorrichtung, wenn die grundsätzliche Lehre verwirklicht ist, die darin besteht, die Komponenten A und B dem Mischkopf zunächst getrennt zuzuführen und in einem gegen Verschmutzungen unempfindlichen Raum zu mischen.

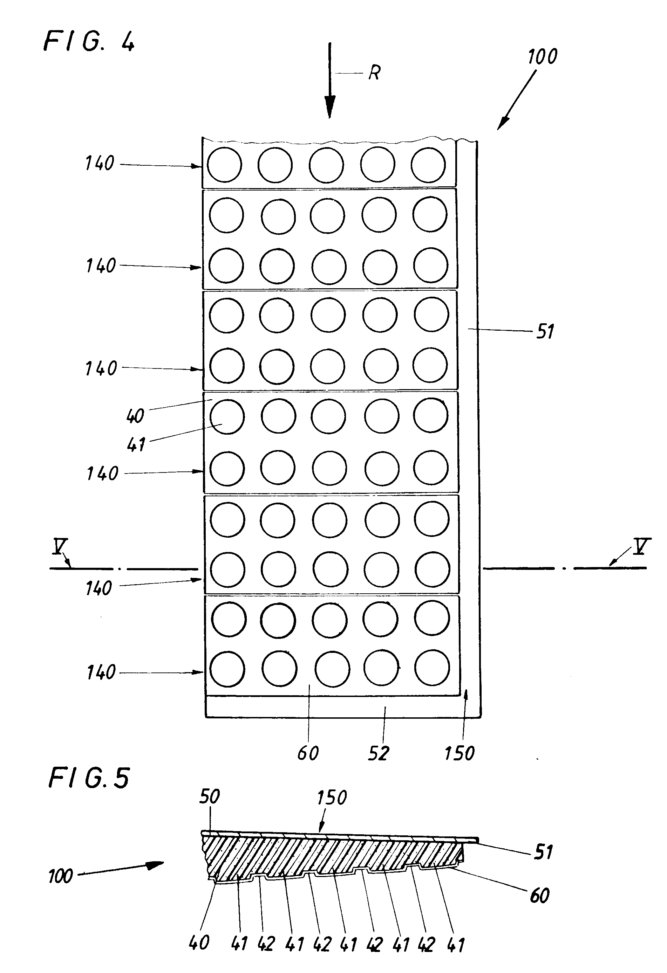

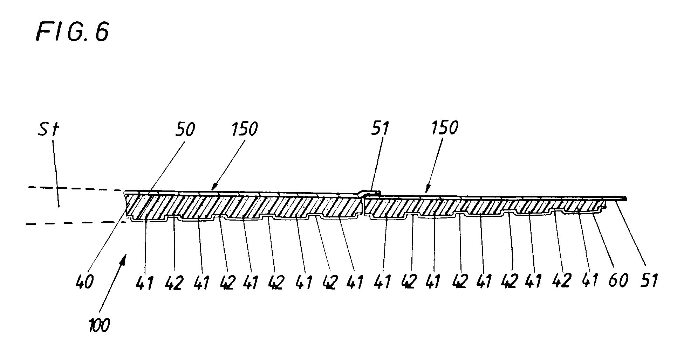

In Fig. 4 bis 6 ist ein entsprechend hergestelltes Wärmedämmaterial mit 100 bezeichnet, das aus der Folienbahn 150 als Dichtschicht und den darauf angeordneten Dämmaterialstreifen 140 als Dämmaterial 40 besteht. Die Folienbahn 150 weist dabei gegenüber den Dämmaterialstreifen 140 überstehende Ränder auf, die als überlappungsabschnitte 51,52 dienen und jeweils an einer Längs- und einer Querkante angeordnet sind. Bei einer Nebeneinanderordnung der Wärmematerialbahn (in der Fig.6 dargestellt) können entsprechende Überlappungsabschnitte 51,52 auf die bereits verlegten Dämmbahnen aufgelegt und miteinander verschweißt werden, so daß ein sicherer Schutz gegen Witterungseinflüsse entsteht. Die Dämmaterialstreifen 140 bestehen dabei aus dem Dämmaterial 40, für das Polyurethan oder Polystyrol gewählt sein kann. Auch die Verwendung von Glasfaser- oder Steinwollestreifen ist möglich. Dabei kann vorgesehen sein, daß das Dämmaterial 40 mit einem Stabilisierungsgewebe 43 versehen ist. Dabei sind auf der von der Folienbahn 150 abgewandten Seite der Dämmaterialstreifen 140 zur Ausbildung von Diffusionskanälen 42 ballige Vorsprünge 41 in regelmäßiger Anordnung vorgesehen. Diese sind als flache Kuppen ausgebildet, wobei auch jede andere geeignete Ausbildung und Anordnung vorgesehen sein kann, durch die gewährleistet ist, daß zwischen dem zu bedeckenden Dach und dem Wärmedämmaterial 100 eine Entfeuchtungszone entsteht, in der sich dann ein Partialdruckverhältnis ergibt, das aufgrund seiner Relation zum Partialdruckverhältnis der Umgebungsluft zu einem Abführen der Feuchtigkeit von der Bauwerksoberfläche führt.

Durch die dargestellte Anordnung werden besonders breite und regelmäßige Dampfentspannungswege geschaffen, die eine sichere Entfeuchtung gewährleisten. Dabei ist das Dämmaterial 40 an der der einlagigen Dichtschichtkaschierung 50 gegenüberliegenden Fläche eine Metallfolie 60 aufkaschiert, wobei das Kaschiermaterial als Kunststoffolie, Metallfolie, Schweißbahn oder Bitumendichtbahn ausgebildet ist.

Das Dämmaterial 40 bzw. die Dämmaterialstreifen 140 weisen in Bahnlängsrichtung einen gleichbleibenden Querschnitt auf, der in Bahnquerrichtung keilförmig ansteigend ist. Zur Ausbildung eines geeigneten Gefälles ist eine Steigung von 1 %, 2 % oder 3 % vorgesehen, wobei auch gewünschte Zwischenwerte vorgesehen werden können.

Die Dichtschichtkaschierung 50 kann aus durch ein Gewebe 53 verstärktem Material oder aus einem in eine Kunststoffolie eingedrücktem Vlies bestehen, wobei vorgesehen werden kann, daß die Dichtschichtkaschierung 50 zur besseren Haftung der Dämmaterialstreifen 140 oberflächig z.B. mit einem Vlies oder Gewebe aus Polyester- bzw. Glasfasern oder organischen Fasern, wie Jute od.dgl. versehen ist.

Bevorzugterweise werden die Dämmaterialstreifen 140 in einer Laminatmaschine als Strang aufkaschiert und als anschließend geschnittenes Dämmaterial 40 ausgebildet, wobei vorgesehen sein kann, daß das Dämmaterial 40 in Platten hergestellt und beim Schneiden der Dämmaterialstreifen 140 die Platten nicht ganz durchgeteilt werden, so daß noch ein Zusammenhang der Dämmaterialstreifen 140 zum Aufkaschieren in größeren Flächen besteht.

**Patentansprüche**

1. Verfahren zum Austragen eines Schaumstoffgemisches, insbesondere für ein Wärmedämmaterial, vermittels eines Mischkopfes für mindestens zwei reaktive Komponenten im Niederdruckverfahren, bestehend aus einem Rohr, in welchem ein Quirl mit hoher Umdrehungszahl umläuft, in dem das zur Reaktion fertige Gemisch durch Schwerkraft ausgetragen und auf eine Unterlage verteilt wird, um dort vollständig zu reagieren und aufzuschäumen, dadurch gekennzeichnet, daß das fertige Gemisch zusätzlich zur Schwerkraft durch Zentrifugalkraft ausgetragen wird und daß nur eine Komponente (A) aus nicht allein reagierenden Materialien nahe eines äußeren Lagers einer fliegenden Welle, auf der ein Quirl aufgesetzt ist, in der Nähe der Welle in einen Mischraum ein- und durch Einwirkung von Zentrifugalkraft von diesem weitergeführt wird, um erst dann mit einer weiteren Komponente (B), die mit der zuerst eingebrachten Komponente (A) reagiert, zur Vermischung kommt, so daß das Lager zur Vermeidung von vorzeitigen Reaktionen, Verschmutzungen, Erhitzungen oder Beschädigungen des Lagers nicht mit den miteinander reagierenden Materialien gemeinsam in Berührung kommt.

2. Mischkopf zur Durchführung des Verfahrens nach Anspruch 1, wobei der Mischkopf (10) in einem Maschinenrahmen (11) angeordnet ist und der Mischkopf (10) aus einem gehäuseartigen Mischrohr (13) besteht, das an seinem dem die Austragöffnung (15) aufweisenden unteren Ende (14) gegenüberliegenden oberen Ende (16) einen deckelartigen Verschlußkörper (17) aufweist, dadurch gekennzeichnet, daß in dem Verschlußkörper (17) ein Lager (18) angeordnet ist, in dem eine von einer Antriebseinrichtung (12) antreibbare Welle (19) fliegend gelagert ist, auf der ein sich bis in den Bereich der Austragsöffnung (15) erstreckende Quirlkörper (20) aufgesetzt ist und die sich durch das gesamte Mischrohr (13) erstreckend ausgebildet ist, wobei unterhalb des Lagers (18) unter Ausbildung eines spaltförmigen Zwischenraumes (26) der zylinderförmig ausgebildete Quirlkörper (20) auf der Welle (19) angeordnet ist, in dem Verschlußkörper (17) ein in den Zwischenraum (26) mündender erster Zuführungskanal (28) ausgebildet ist und in dem Mischrohr (13) ein in einen zwischen der Mischrohrinnenwand (13a) und der Quirloberfläche (20b) ausgebildeter Mischraum (27) mündender zweiter Zuführungskanal (29) ausgebildet ist.

3. Mischkopf nach Anspruch 2, dadurch gekennzeichnet, daß der Quirlkörper (20) auf seiner Oberfläche (20b) in einem ersten Abschnitt (21) mehrere Reihen von Dornen (23) und in einem zweiten Abschnitt (22) eine Förderschnecke (24) für den Austrag des gemischten Materials (A,B) aufweist.

4. Mischkopf nach einem der Ansprüche 2 oder 3, dadurch gekennzeichnet, daß der spaltförmige Zwischenraum (26), aus dem die durch den ersten Zuführungskanal (28) zugeführte Komponente (A) herauszentrifugiert wird, durch die Anordnung von austauschbaren Scheiben (30) unterschiedlicher Dicke zwischen einem Wellenabsatz (19a) der Welle (19) und einer entsprechenden Stufe (20a) in der Längsdurchbohrung (120) des Quirlkörpers (20) in der Höhe veränderbar ist.

5. Mischkopf nach einem der Ansprüche 2 bis 4, dadurch gekennzeichnet, daß das Mischrohr (13), in dem der Quirlkörper (20) umläuft, an der Austragöffnung (15) mit einer Fase (15a) versehen ist, die dem aus den gemischten Komponenten (A,B) bestehenden Material einen bestimmten Austragskegel (K) verleiht.

6. Mischkopf nach einem der Ansprüche 2 bis 5, dadurch gekennzeichnet, daß die Antriebseinrichtung (12) drehzahlregelbar ist.

7. Mischkopf nach Anspruch 6, dadurch gekennzeichnet, daß die Antriebseinrichtung (12) frequenzgeregelt ist.

8. Mischkopf nach einem der Ansprüche 2 bis 7, dadurch gekennzeichnet, daß die Schnecke (24) auf der Oberfläche (20b) des Quirlkörpers (20) mehrgängig ausgebildet ist.

9. Mischkopf nach einem der Ansprüche 2 bis 8, dadurch gekennzeichnet, daß die auf der Oberfläche (20b) des Quirlkörpers (20) wendelförmig umlaufenden Schneckengänge (25) durch eine Anzahl zueinander beabstandet angeordneter und sich in Wellenlängsrichtung (L) erstreckender Mantelnuten (32) mindest zum Teil verbunden sind.

10. Mischkopf nach Anspruch 9, dadurch gekennzeichnet, daß die Mantelnuten (32) auf der Oberfläche (20b) des Quirlkörpers (20) sich nicht bis zum austragsöffnungsseitigen Ende des Quirls (20) erstrecken und die im Bereich der Austragsöffnung (15) befindlichen Schneckengänge (25) der Schnecke (24) nicht durch Mantelnuten verbunden sind.

11. Mischkopf nach einem der Ansprüche 2 bis 10, dadurch gekennzeichnet, daß der Mischkopf (10) aus der Senkrechten (S), senkrecht zur Wellenlängsrichtung (L) seitlich und in der Höhe verstellbar im Maschinenrahmen (11) angeordnet ist.

12. Mischkopf nach einem der Ansprüche 2 bis 11, dadurch gekennzeichnet, daß die Außenwand (13b) des Mischrohres (13) mit einem das Mischrohr (13) umfassenden Ring, der gegenüber dem Mischrohr (13) in Wellenlängsrichtung (L) verschiebbar ist, als Abstreifer (33) versehen ist.

13. Wärmedämmaterial bestehend aus auf eine Unterlage kaschierte Dämmaterialstreifen aus einem nach dem Verfahren nach Anspruch 1 ausgetragenen Schaumstoffgemisch, dadurch gekennzeichnet, daß zur Ausbildung ines Wärmedämmaterials als Dämm- und Dichtschicht für Dachflächen, das ermöglicht, größere Flächen von mehreren Quadratmetern auf einmal zu belegen, die Dämmaterialstreifen (140) auf eine geeignete Folienbahn so als Dichtschicht (150) kaschiert sind, daß das Wärmedämmaterial als Wärmedämmung und Dichtschicht ausgebildet ist, so daß bei Verlegung eine weitere Dichtbahn nicht aufgebracht werden muß, wobei das Kaschiermaterial (50) aus einer Kunststoffolie, einer Metallfolie oder aus einer Bitumendichtbahn besteht, die Dämmaterialstreifen (140) aus Polyurethan-Streifen, aus Polystyrol-Partikelschaum oder aus extrudiertem Polystyrol bestehen, und die Dämmaterialstreifen (140) als in einer Laminatmaschine als Strang aufkaschiertes und anschließend geschnittenes Dämmaterial (40) ausgebildet ist oder das Dämmaterial (40) in Dämmaterialstreifen (140) geschnitten aufkaschiert ist, daß die Dämmaterialstreifen (140) einen rechteckförmigen oder keilförmigen Querschnitt aufweisen, daß in das Dämmaterial (40) an der der einlagigen Dichtschichtkaschierung (50) gegenüberliegenden Fläche Diffusionskanäle (42) eingearbeitet sind, und daß auf das Dämmaterial (40) an der der einlagigen Dichtschichtkaschierung (50) gegenüberliegenden Fläche eine Metallfolie (60) aufkaschiert ist.

14. Wärmedämmaterial nach Anspruch 13, dadurch gekennzeichnet, daß der Steigungswinkel der Keilform quer zur Rollbahnlängsrichtung (R) einer Steigung (St) von 1 %, 2 % oder 3 % entspricht.

15. Wärmedämmaterial nach einem der Ansprüche 13 oder 14, dadurch gekennzeichnet, daß das Dämmaterial (40) mit einem Stabilisierungsgewebe (43) versehen ist.

16. Wärmedämmaterial nach einem der Ansprüche 13 bis 15, dadurch gekennzeichnet, daß die Dichtschichtkaschierung (50) aus durch ein Gewebe (53) verstärktem Material oder aus einem in eine Kunstoffolie eingedrücktem Vlies besteht.

17. Wärmedämmaterial nach einem der Ansprüche 13 bis 16, dadurch gekennzeichnet, daß das Dämmaterial (40) in Platten hergestellt und beim Schneiden der Dämmaterialstreifen (140) die Platten nicht ganz durchgeteilt werden, so daß noch ein Zusammenhang der Dämmaterialstreifen (140) zum Aufkaschieren in größeren Flächen besteht.

18. Wärmedämmaterial nach einem der Ansprüche 13 bis 17, dadurch gekennzeichnet, daß die Dichtschichtkaschierung (50) zur besseren Haftung der Dämmaterialstreifen (140) oberflächig z.B. mit einem Vlies oder Gewebe aus Polyester- bzw. Glasfasern oder organischen Fasern, wie Jute od.dgl. versehen ist.

## Claims

1. Method for delivering a foamable mixture, especially for a temperature insulation material, using a mixing head for at least two reactive components in a low-pressure method, comprising a tube within which an agitator rotates at high speed, in which the mixturte ready for reaction is delivered by gravity and distributed on a substrate in order to react there completely and to expand, characterized in that the finished mixture is, in addition to the gravity, discharged by centrifugal force and that only one component (A) of materials which do not react by themselves is introduced close to an external bearing of a floating shaft upon which an agitator is mounted, and, in the proximity of the shaft, is introduced into a mixing chamber and, by the action of centrifugal force, conveyed on further by the same, in order to only then be intermixed with a further compound (B) which reacts with the components (A) introduced first so that the bearing, in order to avoid premature reactions, contaminations, heating of or damage to the bearing, does not come in joint contact with the interreacting materials.

2. Mixing head for the realization of the method according to Claim 1, in which the mixing head (10) is mounted within an engine frame (11) and the mixing head (10) is comprised of a casing-like mixing tube (13) which, at its upper extremity (16) located opposite the lower extremity (14) provided with the discharge aperture (15), possesses a lid-like closing member (17), characterized in that, in the closing member (17), a bearing (18) is disposed in which a shaft (19) drivable by a driving means (12) is floatingly supported, upon which is mounted an agitator body (20) extending as far as into the area of the discharge aperture (15) and which is constructed so as to extend right through the entire mixing tube (13), in which, below the bearing (18), while forming a gap-like interspace (26), the cylindrically configured agitator body (20) is mounted on the shaft (19) while, in the closing member (17), a first feed channel (28) terminating in the interspace (26) is constructed and, in the mixing tube (13), a second feed channel (29) terminating in a mixing chamber (27) constructed between the mixing tube inner wall (13a) and the agitator surface (20b) is constructed.

3. Mixing head according to Claim 2, characterized in that the agitator body (20), on its surface (20b) within the first section (21), is provided with several rows of pins (23) and, in within a second section (22), with a conveyer screw (24) for the discharge of the mixed material (A,B).

4. Mixing head according to either Claim 2 or 3, characterized in that the gap-like interspace (26) from which the component (A) supplied through the first feed channel (28) is centrifuged out, by the disposition of interchangeable disks (30) possessing different thicknesses between a shaft recess (19a) in the shaft (19) and a corresponding step (20a) within the longitudinal drilled hole (120) of the agitator body (20), is vertically adjustable.

5. Mixing head according to any of Claims 2 to 4, characterized in that the mixing tube (13) inside which the agitator body (20) rotates, at the discharge aperture (15), is provided with a chamfer (15a), which imparts a specific discharge cone (K) to the material comprised of the intermixed components (A,B).

6. Mixing head according to any of Claims 2 to 6, characterized in that the speed of the driving means (12) is controllable.

8. Mixing head according to any of Claims 2 to 7, characterized in that the screw (24), on the surface (20b) of the agitator body (20), is constructed so as to be multiply channeled.

9. Mixing head according to any of Claims 2 to 8, characterized in that the screw courses (25) proceeding spirally around the surface (20b) of the agitator body (20), intercommunicate at least in part with the aid of a plurality of casing grooves (32) which are disposed spaced apart from each other and extend in the longitudinal direction (L) of the shaft.

10. Mixing head according to Claim 9, characterized in that the casing grooves (32) on the surface (20b) of the agitator body (20) do not extend as far as to the end of the agitator (20) on the side of the discharge aperture (15) and in that the screw channels (25) of the screw (24) to be found within the area of the discharge aperture (15) do not intercommunicate with the aid of casing grooves (32).

11. Mixing head according to any of Claims 2 to 10, characterized in that the mixing head (10) is mounted in the machine frame (11) out of the vertical (S), perpendicularly to the longitudinal direction (L) of the shaft and so as to be vertically adjustable.

12. Mixing head according to any of Claims 2 to 11, characterized in that the outer wall (13b) of the mixing tube (13) is provided with a ring embracing the mixing tube (13) which, with respect to the mixing tube (13), is displaceable in the longitudinal direction of the shaft (L), thus acting as a wiper (33).

13. Temperature insulation material comprising strips of insulation material of a foamable mixture delivered according to the method as per Claim 1 bonded on to a substrate, characterized in that, for the formation of a temperature insulation material in the form of an insulating and sealing layer for roof areas which makes it possible to cover larger areas of several square metres at a time, the insulation material strips (140) being bonded on to a suitable foil web in the form of a sealing layer (159) in such a way that the temperature insulation material is constructed in the form of a temperature-insulating and sealing layer so that, when being laid, no necessity exists for the application of a further sealing web, wherein the laminating material (50) is comprised of a plastic foil, a metal foil, a metal foil or of a bitumen sealing web, the strips of insulating material are comprised of polyurethane strips, of polystyrene particle foam or of extruded polystyrene, and the strips of insulation material (140) are constructed in the form of insulating material (40) bonded on in a laminator in the form of a strand and are subsequently cut, or in that the insulating material (40) is bonded on cut into strips of insulation material (140), in that the strips of insulating material (140) have a rectangulat or wedge-shaped cross-section, in that, in the insulation material (40), on the surface located opposite the single-layer sealing layer lamination (50), diffusion channels (42) are incorporated, and in that a metal foil (60) is bonded on to the surface located opposite the single-layer sealing layer lamination (50).

**14.** Pemperature insulation material according to Claim 13, characterized in that the ascending gradient of the wedge shape, transversally to the longitudinal direction of the web roll (R) corresponds to an ascending gradient (St) of 1%, 2% or 3%.

**15.** Temperature insulation material according to either of Claims 13 or 14, characterized in that the insulating material (40) is provided with a stabilizing fabric (43).

**16.** Temperature insulation material according to any of Claims 13 to 15, characterized in that the sealing layer lamination (50) is comprised of a material reinforced by a fabric (53) or of a nonwoven fabric presssed into a plastic foil.

**17.** Temperature insulation material according to any of Claims 13 to 16, characterized in that the insulation material (40) is manufactured in the form of plates and in that, when the strips of insulation material (140) are cut, the plates are not cut through completely so thAt a coherence of the strips of insulation material (140) still exists for being bonded in larger areas.

**18.** Temperature insulation material according to any of Claims 13 to 17, characterized in that the sealing layer lamination (50), for a better adhesion of the strips of insulation material (140), on its surface, is provided with e.g. a non-woven fabric or a fabric of polyester fibres or glass fibres or of organic fibres, such as jute or the like.

**Revendications**

1. Procédé pour le déversement d'un mélange alvéolé, en particulier pour un matériau d'isolation thermique, au moyen d'une tête mélangeuse pour au moins deux composantes réactives dans le procédé basse pression, composée d'un tube contenant un mélangeur qui tourne à grande vitesse et dans lequel le mélange prêt pour la réaction est expulsé par gravité et réparti sur un support pour y réagir complètement et mousser, caractérisé en ce que le mélange prêt est expulsé par la force centrifuge en plus de la gravité et qu'une seule composante (A) de matériaux qui ne réagissent pas seuls près d'un palier extérieur d'un arbre flottant, sur lequel est placé un mélangeur est amenée à proximité de l'arbre dans une zone de mélange et transférée de cette zone sous l'effet de la force centrifuge pour se mélanger alors seulement avec une autre composante (B) qui réagit avec la composante (A) introduite en premier lieu, de telle sorte que le palier n'entre pas en contact avec les matières qui réagissent entre elles afin d'éviter des réactions prématurées, des contaminations, des échauffements ou des dégâts au palier.

2. Tête mélangeuse pour l'exécution du procédé suivant la revendication 1, la tête mélangeuse (10) étant disposée dans un bâti de machine (11) et se composant d'un tube mélangeur (13) en forme de boîtier présentant un élément de fermeture (17) en forme de couvercle à son extrémité supérieure (16) opposée à l'extrémité inférieure (14) portant l'orifice de déversement (15), caractérisée en ce que l'élément de fermeture (17) contient un palier (18) dans lequel est logé de façon flottante un arbre (19) qui peut être actionné par un système d'entraînement (12) et sur lequel est placé un élément mélangeur (20) qui s'étend jusque dans la zone de l'orifice de déversement (15) et qui traverse l'ensemble du tube mélangeur (13), l'élément mélangeur (20) en forme de cylindre étant disposé sur l'arbre (19) en dessous du palier (18) pour former un espace intermédiaire (26) en forme de fente, un premier canal d'alimentation (28) qui débouche dans l'espace intermédiaire (26) étant conçu dans l'élément de fermeture (17) et un second canal d'alimentation (29) qui débouche dans un espace de mélange (27) formé entre la paroi interne (13a) du tube mélangeur et la face supérieure (20b) du mélangeur étant conçu dans le tube mélangeur (13).

3. Tête mélangeuse suivant la revendication 2, caractérisée en ce que l'élément mélangeur (20) présente à sa surface (20b) plusieurs rangées de goujons (23) dans une première section (21) et une vis sans fin (24) pour le déversement de la matière mélangée (A,B) dans une seconde section (22).

4. Tête mélangeuse suivant l'une des revendications 2 ou 3, caractérisée en ce que l'espace intermédiaire (26) en forme de fente hors duquel la composante (A) est expulsée par centrifugation par l'intermédiaire du premier canal d'alimentation (28) est réglable en hauteur grâce à la disposition de disques interchangeables (30) d'épaisseur variable entre un palier (19a) de l'arbre (19) et un seuil (20a) correspondant dans l'alésage longitudinal (120) de l'élément mélangeur (20).

5. Tête mélangeuse suivant l'une des revendications 2 à 4, caractérisée en ce que le tube mélangeur (13), dans lequel tourne l'élément du mélangeur (20), est muni sur l'orifice de déversement (15) d'un chanfrein (15a) qui donne au déversement de la matière composée des composantes (A,B) mélangées une forme déterminée de cône (K).

6. Tête mélangeuse suivant l'une des revendications 2 à 5, caractérisée en ce que la vitesse de rotation du système d'entraînement (12) est réglable.

7. Tête mélangeuse suivant la revendication 6, caractérisée en ce que la fréquence du système d'entraînement (12) est réglable.

8. Tête mélangeuse suivant l'une des revendications 2 à 7, caractérisée en ce que la vis sans fin (24) est configurée avec plusieurs spires sur la surface (20b) de l'élément du mélangeur (20).

9. Tête mélangeuse suivant l'une des revendications 2 à 8, caractérisée en ce que les spires (25) de la vis sans fin qui tournent en hélice à la surface (20b) de l'élément du mélangeur (20) sont reliées au moins en partie par plusieurs rainures périphériques (32) écartées les unes des autres et s'étendant dans le sens longitudinal (L) de l'arbre.

10. Tête mélangeuse suivant la revendication 9, caractérisée en ce que les rainures périphériques (32) à la surface (20b) de l'élément mélangeur (20) ne s'étendent pas jusqu'à l'extrémité du mélangeur (20) côté orifice de déversement et que les spires (25) de la vis sans fin (24) qui se trouvent dans la zone de l'orifice de déversement (15) ne sont pas reliées par des rainures périphériques.

11. Tête mélangeuse suivant l'une des revendications 2 à 10, caractérisée en ce que la tête mélangeuse (10) est décalée par rapport à la verticale (S), perpendiculairement par rapport au sens longitudinal (L) de l'arbre, et est réglable en hauteur dans le bâti de machine (11).

12. Tête mélangeuse suivant l'une des revendications 2 à 11, caractérisée en ce que la paroi extérieure (13b) du tube mélangeur (13) est munie d'une bague entourant le tube mélangeur (13) qui peut coulisser par rapport au tube mélangeur (13) dans le sens longitudinal (L) de l'arbre et fait office de racloir (33).

13. Matériau d'isolation thermique constitué de bandes de matériau isolant contrecollées sur un support et composées d'un mélange de produit alvéolé déversé suivant le procédé de la revendication 1, caractérisé en ce que, pour former un matériau d'isolation thermique comme couche d'isolation ou d'étanchéité pour les toits plats qui permette de couvrir en une fois des surfaces assez importantes de plusieurs mètres carrés, les bandes de matériau isolant (140) sont contrecollées sur une bande en feuille appropriée pour former une couche d'étanchéité (150) de telle façon que le matériau d'isolation thermique soit conçu comme isolation thermique et comme couche d'étanchéité, de sorte qu'il ne faille pas poser une autre bande d'étanchéité lors de la pose, le matériau de contrecollage (50) se composant d'une feuille plastique, d'une feuille métallique ou d'un panneau bitumineux d'étanchéité, les bandes de matériau isolant (140) se composant de bandes de polyuréthanne, de mousse en particules de polystyrène ou de polystyrène extrudé, et les bandes de matériau isolant (140) étant conçues comme un matériau isolant (40) contrecollé sous forme continue dans une machine à stratifier et coupé ensuite ou le matériau isolant (40) étant contrecollé à partir de bandes découpées de matériau isolant, de telle sorte que les bandes de matériau isolant (140) présentent une section rectangulaire ou cunéiforme, en ce que des canaux de diffusion (42) sont creusés dans le matériau isolant (40) sur la surface opposée au contrecollage monocouche (50) de la couche d'étanchéité et en ce qu'une feuille métallique (60) est collée sur le matériau isolant (40) à la surface opposée au contrecollage monocouche (50) de la couche d'étanchéité.

**14.** Matériau d'isolation thermique suivant la revendication 13, caractérisé en ce que l'inclinaison de la forme cunéiforme perpendiculairement au sens longitudinal (R) de la bande à enrouler correspond à une inclinaison (St) de 1 %, 2 % ou 3 %.

**15.** Matériau d'isolation thermique suivant les revendications 13 ou 14, caractérisé en ce que le matériau isolant (40) est pourvu d'un tissu de stabilisation (43).

**16.** Matériau d'isolation thermique suivant l'une des revendications 13 à 15, caractérisé en ce que le contrecollage (50) de la couche d'étanchéité se compose d'un matériau renforcé par un tissu (53) ou d'un matelas de fibres injecté dans une feuille en matière plastique.

**17.** Matériau d'isolation thermique suivant l'une des revendications 13 à 16, caractérisé en ce que le matériau isolant (40) est fabriqué en plaques et que lors de la découpe des bandes de matériau isolant (140), les plaques ne sont pas complètement divisées, de telle sorte que les bandes de matériau isolant (140) soient encore reliées pour le contrecollage des surfaces plus importantes.

**18.** Matériau d'isolation thermique suivant l'une des revendications 13 à 17, caractérisé en ce que le contrecollage (50) de la couche d'étanchéité est recouvert en surface d'un matelas de fibre ou d'un tissu en polyester ou en fibres de verre ou en fibres organiques comme du jute ou une matière équivalente, par exemple, pour assurer une meilleure adhérence des bandes de matériau isolant (140).

*FIG. 1*

*FIG. 2*

FIG. 3

FIG. 4

FIG. 5

FIG. 6